# EUROPEAN PATENT SPECIFICATION

(11) **EP 3 198 669 B1**
(45) Date of publication and mention of the grant of the patent: **18.10.2023**
(21) Application number: 15771468.4
(22) Date of filing: 21.09.2015
(51) Int. Cl.: H01M 4/04, C01G 53/00, H01M 4/1391, H01M 4/36, H01M 4/505, H01M 4/525

(54) **LITHIUM METAL OXIDE CONTAINING BATTERIES HAVING IMPROVED RATE CAPABILITY**
LITHIUMMETALLOXIDHALTIGE BATTERIEN MIT VERBESSERTER RATENKAPAZITÄT
BATTERIES CONTENANT DE L'OXYDE MÉTALLIQUE DE LITHIUM PRÉSENTANT UNE CAPACITÉ DE DÉBIT AMÉLIORÉ

(30) Priority: 23.09.2014 US 201462053868 P
(43) Date of publication of application: 02.08.2017
(73) Proprietor: Jiangsu Hengtron Nanotech Co., Ltd., Yancheng City, Jiangsu Province (CN)
(72) Inventor: KAO, Yu Hua, Marlborough, MA 01752 (US); HAN, Ting, Midland, MI 48642 (US); HU, Ing-Feng, Midland, MI 48667 (US); MAEDA, Hideaki, Midland Michigan 48674 (US)
(74) Representative: Bringer IP
(86) International application number: PCT/US2015/051144
(87) International publication number: WO 2016/048862

(56) References cited:
- EP-A1- 2 654 108
- EP-A1- 2 728 653
- WO-A1-2009/099158
- WO-A1-2014/038394
- WO-A1-2014/142279
- JP-A- 2012 054 136
- JP-A- 2014 067 546
- US-A1- 2010 209 763
- US-A1- 2010 209 771
- US-A1- 2012 282 522
- US-A1- 2014 199 582

## Description

### Field of the Invention

The invention relates to a method of making improved lithium ion batteries (LIBs) that have improved charge and discharge rate capability and the lithium metal oxide (LMO) cathode powder used to make them. In particular the invention relates to LMO powders that have primary particles that are agglomerated into secondary particles that deagglomerate upon forming a cathode used to make a lithium ion battery.

### Background of the Invention

Lithium ion batteries have over the past couple of decades been used in portable electronic equipment and more recently in hybrid or electric vehicles. Initially, lithium ion batteries first employed lithium cobalt oxide cathodes. Due to expense, toxicological issues and limited capacity, other cathode materials have or are being developed.

WO 2014/038394A1 describes a positive electrode active material for a lithium secondary battery. The positive electrode active material comprises a domain-oriented agglomerate including a plurality of oriented secondary particles configured from a plurality of primary particles which comprise a lithium complex oxide.

JP2012054136A describes a method of manufacturing a lithium ion secondary battery anode. The method comprises the steps of: preparing an anode mixture-containing composition; coating a current collector with the anode mixture-containing composition, and drying it to form an anode mixture layer; and calendering the anode mixture layer.

JP2014067546A describes a positive electrode active material of a lithium secondary battery comprising secondary particles made up of a large number of primary particles having an average particle diameter of 0.01-5 um. The secondary particles have a porosity of 3-30%, a ratio of open pores of 70% or larger, an average pore diameter of the open pores of 0.1-5 um, and the average particle diameter of the primary particles divided by the average pore diameter of the open pores is a value of 0.1-5.

One class of materials that has been developed and has been commercially employed is lithium metal oxides (LMOs) comprised of two or more of nickel, manganese and cobalt and in particular when all three of these metals are present. These materials generally display a layered structure with a singular rhombohedral phase in which initial high specific charge capacities (typically from 155 to 170 mAh/g) have been achieved when charged to voltages of about 4.2 volts vs Li/Li⁺. Unfortunately, these materials have suffered from a short cycle life and safety issues related to oxygen evolution under certain conditions resulting in fires.

Li/Li+ represents the redox potential of the lithium reference electrode, which is defined as 0 volts by convention. Consequently, when using an anode other than Li metal, these voltages would be decreased to account for the difference in potential between this other anode and Li metal. Illustratively, a fully charged graphite anode has a potential of about 0.1 V vs Li/Li+. Therefore, when charging the cathode in a battery with a graphite anode to 4.25 V vs Li/Li+, the cell voltage will be approximately 4.15 V.

The cycle life is generally taken as the number of cycles (charge-discharge) before reaching a specific capacity that is 80% of the initial specific capacity. Each cycle for these materials is typically between 4.2 volts to 2 volts. These batteries have also suffered from inconsistencies in performance from one battery or cell to another, even though made from the same materials.

These LMOs may contain dopants or coatings that improve one or more properties such as cycle life. They generally are stoichiometric or essentially stoichiometric such as those described by US Pat. Nos. 6,964,828; 6,168,887; 5,858,324; 6,368,749; 5,393,622 and European Pat. Publ. Nos. EP1295851, EP0918041, and EP0944125 and Japanese Patent Disclosure No. 11-307094.

These lithium metal oxides have been made by solid state synthesis where particulate precursors are mixed or milled and then heated to a temperature to form the LMO. Examples of this method are described in US Pat. Nos. 6,333,128; 7,211,237 and 7,592,100, but as described in US Pat. No. 7,592,100 (col. 7, line 38 to col. 8, line 43) solid state synthesis methods are not desirable because of the difficulty in making a single phase layered material and the requirement to use very small size particles.

The lithium metal oxides have also been formed by first precipitating a complex precursor in continuously stirred reactors with the complex precursor compound subsequently heated with a lithium compound to a temperature to form the LMO. Examples of these methods are described by US Pat. No. 7,592,100 and 6,964,828 and Japanese Patent Disclosure No. 11-307094. Other methods have also been described such as hydrothermal methods and sol gel methods to form the complex oxides. Examples of these are described in US Pat. No. 7,482,382 and EP0813256.

Consequently, LMOs have tended to be made from complex metal compounds, "LMO precursors," precipitated from a continuously stirred reactor that are then mixed with lithium containing compounds and heated sufficiently to form the LMOs. They have generally been made this way to avoid the problems encountered with simple dry mixing of precursors such as non-uniformity of the chemistry, primary grain/particle size and secondary particle size.

Unfortunately, continuous stirred reactors require long reaction residence times to achieve desired secondary particle size, varying reaction conditions that preclude them from being used continuously (e.g., secondary particle size growth over time) and large capital investment due to large tanks necessary to make the LMOs on a production scale. Likewise, because of the inherent constraints of a precipitation process, the LMOs that are formed are very similar and they tend to form LMOS that suffer from low cathode density, for example, due to the primary particles being densely sintered into hard secondary particles with significant amounts of internal closed porosity, which results in, at least in part, lower charge and discharge rates.

Accordingly, it would be desirable to provide an LMO and method to make the LMO that provides for a lithium ion battery (LIB) having a high voltage, higher capacity, greater cycle-ability, high rate capability and improved safety.

### Summary of the Invention

The applicants have discovered a method for making LMOs that realizes an LMO that enables an LIB to have improved energy density and discharge rate capability (rate capability) without sacrificing many of the desirable properties of LMOs.

A first aspect of the invention is lithium metal oxide (LMO) powder useful to make a lithium ion battery cathode, the lithium metal oxide powder comprising secondary particles comprised of agglomerated primary lithium metal oxide particles bonded together, the primary lithium metal oxide particles being comprised of Li, Ni, Mn, Co and oxygen and having a median primary particle size of 0.1 micrometer to 3 micrometers, wherein the secondary particles have a porosity that is from 15% to 35% and, by volume, the porosity is greater than 50% open porosity;
wherein said lithium metal oxide powder is represented by:

   LiₓM_{y}O₂
where 0.8<x<1.15, y is 1 and M being comprised of Ni, Co and Mn and being present in an amount as represented by: Ni_{1-a-b}MnₐCo_{b} where 0.1≤a≤0.9 and 0.05≤b≤0.8 and (1-a-b)/(a+b) is 0.25 to 1.5; and
   wherein the secondary particles have a surface area of 0.1 m²/g to 0.75 m²/g.

The LMO powder of the first aspect surprisingly enables the making of cathodes (metal foils coated with the LMO powder) that have improved rate capability. We discovered that when the LMO powder of this invention is used to make a cathode, the secondary particles remain intact during the coating of the foil, which may allow for reduced organic binders to adhere the powder to the foil and to itself. Further, upon compaction of the coating on the foil, the secondary particles deagglomerate and break up into its primary particles while still having the desired adhesion and cohesiveness.

A second aspect of the invention is a method of forming a cathode comprising:
(a) mixing the lithium metal oxide powder of the first aspect, a binder and a solvent to form a coating mixture;
(b) contacting the coating mixture to a surface of a metal foil;
(c) removing the solvent to form metal foil having a coating thereon, the coating comprised of the lithium metal oxide and binder; and
(d) pressing the metal foil having the coating thereon to form the cathode, wherein said coating is comprised of deagglomerated lithium metal oxide secondary particles.

In a particular embodiment, the LMO of this invention is mixed with an LMO which is comprised of secondary particles that do not deagglomerate upon compaction to form the cathode. The method and in particular this embodiment allows cathodes to be made with a high density while not requiring greater amounts of binder to bind primary particles, which is necessary to be able to coat mixtures of LMO powders comprised of primary particles.

### Brief Description of the Drawings

Figure 1 is a scanning electron micrograph of a cross-section of a secondary particle of a lithium metal oxide powder of this invention.
Figure 2 is a scanning electron micrograph of a cross-section of a cathode of this invention comprised of deagglomerated lithium metal oxide powders of this invention.
Figure 3 is a scanning electron micrograph of a cross-section of a secondary particle of a lithium metal oxide powder not of this invention.
Figure 4 is a scanning electron micrograph of a cross-section of a cathode not of this invention comprised of lithium metal oxide powders that do not deagglomerate upon pressing.

### Detailed Description of the Invention

The lithium metal oxide (LMO) powder of this invention has secondary particles comprised of agglomerated primary particles that deagglomerate when forming a cathode. LMO chemistries are described in U.S. Pat. Nos. 5,993,998; 6,677,082; 6,680,143; 7,205,072; and 7,435,402, Japanese Unexamined Pat. No. 11307094A, EP Pat. Appl. No. 1193782; Chem. Mater. 23 (2011) 3614-3621; and J. Electrochem. Soc., 145:12, Dec. 1998 (4160-4168).

According to the invention, the lithium metal oxide powder is represented by:

LiₓM_{y}O₂

where 0.8<x<1.15, y is 1 and M is comprised of Ni, Co and Mn and being present in an amount as represented by: Ni_{1-a-b}MnₐCo_{b} where 0.1≤a≤0.9 and 0.05≤b≤0.8 and (1-a-b)/(a+b) is 0.25 to 1.5. It is further preferred that x is from 0.85 to 1.1. It is also preferred that a is from 0.1 to 0.4 and b is from 0.1 to 0.4 with the ratio of (1-a-b)/(a+b) being 0.4 to 1.2.

It is understood that the LMO chemistry may also contain small amounts of dopants that improve one or more properties, with examples being fluorine, aluminum, magnesium and titanium.

The LMO powder generally has a median (D50) primary particle size of 0.1 micrometer to 3 micrometers. "Primary particle" means the smallest distinct division of a given phase as is readily determined by microscopy and is analogous, for example, to a grain in a fully dense ceramic. The D50 primary particle size is desirably at least 0.2, 0.4 or 0.5 to 3, or 2 micrometers. The particle size distribution is given by D10 and D90 particles sizes. D10 is the size where 10% of the particles are smaller and D90 is the particle size where 90% of the particles are smaller in a given distribution by number. The D10 typically is 0.1, 0.2, or 0.3 micrometer. The D90 is typically 8, 5, or 4 micrometers.

The secondary particle size and size distributions (volumetric equivalent spherical diameter in micrometers) of the lithium metal oxide powder are a median (D50) of 5 to 25 micrometers, D10 of 1 to 10 micrometers, D90 of 20 to 45 micrometers. Likewise, there typically are no secondary particles less than about 1 micrometer. Preferably, the D50 is 5 or 15 to about 20 micrometers, the D90 is about 25 to about 40 micrometers. The particle size and size distribution may be determined by known techniques such as microscopic, sieving, or light scattering techniques.

The secondary particles have a porosity that is from 15% to 35% by volume. The porosity is primarily (greater than 50% by volume) open porosity. For example, the secondary particle may have some porosity that is closed, but desirably it is less than 5% or 10% by volume. The amount of porosity is at most about 35% so as to ensure it does not deagglomerate prematurely when making a cathode. Preferably, essentially all of the porosity is open porosity.

The secondary particles will generally only deagglomerate (break down to the primary particles without fracturing the primary particles themselves) under typical strains arising in roll pressing utilized in making cathodes. Generally, this means the secondary particles deagglomerate in a roll press (with or without heating) at a press gap typically between 0.01 mm to 1 mm. Generally, this means the pressure of the roll press correlates to a force being applied that is from about 5 metric tons to about 20 metric tons.

The secondary particle size has a surface area that is about 0.75 m²/g or preferably at most about 0.6, 0.5 or 0.4 m²/g to at least about 0.1 m²/g. The low surface area prior to fracturing surprisingly allows the use of lower organic binders when making the cathode, which is also believed to enhance the rate capability. Likewise, said lithium metal oxide displays a tap density of at least about 40% of the theoretical density of said lithium metal oxide, which is highly desirable when forming a cathode layer on a metal foil described further below. Typically, the tap densities are desirably at least about 1.15. Preferably, the tap density is at least about 1.5, 1.75, 2 or even 2.1 g/cc.

Illustratively, an LMO powder comprised of Li, Ni, Mn, Co and O may be made as follows. It is understood that depending on the chemistry and other factors, the particular variables needed to make LMO powder may vary accordingly.

To form the LMO powder, a precursor particulate mixture is heated to form it. The precursor mixture is comprised of particulates of Li, Mn, Ni, Co and oxygen. Each of the precursors containing Li, Mn, Ni and Co may also contain oxygen.

Illustrative Mn particulate precursors include hydroxides, oxides, carbonates, hydrated forms of the aforementioned or combination of two or more of these. Preferably, the Mn particular precursor is manganese (II) oxide, manganese (III) oxide, manganese (ii, III) oxide, manganese carbonate or combination thereof. More preferably, the Mn particular precursor is manganese (III) oxide or manganese carbonate.

Precursors comprising Li, Ni, Co and oxygen may include hydroxides, oxides, carbonates, hydrated forms of the aforementioned or combination of two or more of these. Illustrative suitable precursors include, for example, lithium carbonate, nickel hydroxide, nickel carbonate hydroxide tetrahydate, cobalt hydroxide, and nickel cobalt hydroxide [NiCo(OH)₂].

Generally, the particulate precursors have a primary particle size and size distribution, which is given by the median size (D50), D10, D90 and a maximum size limitation. The size is the equivalent spherical diameter by volume which may be measured by micrographic techniques, but preferably is measured by a laser light scattering method using dispersions of the solids in liquids at low solids loading. D10 is the size where 10% of the particles have a smaller size, D50 is the size where 50% of the particles have a smaller size and D90 is the size where 90% of the particles have a smaller size by volume.

The D50 of the precursor particulates generally is from about 0.1 to 0.8 micrometers, the D10 is 0.05 to 0.3 and D90 is 0.35 to 1.5 micrometers with essentially no particles being larger than about 3, about 2.5 or even about 2 micrometers (also referred to as D100). Preferably, the D90 is 0.45, 0.5 or 0.55 to 1.4, 1.2 or 1 micrometers. However, if too many particles are greater than about 2 micrometers, the electrochemical performance may suffer.

The particle size and size distribution of the particulate precursors may be formed by any suitable method, but typically requires at least some comminution such as known milling techniques. Milling, for example, may include dry milling, wet milling, jet milling and any combination thereof. The milling may be performed separately for each precursor particulate and later blended in the proper proportions by known blending methods. Milling apparatus such as ball mills, horizontal and vertical media mills, vibratory mills and attritor mills may be employed. Milling may be performed in successive milling steps to realize the desired particle size and size distribution. In a preferred embodiment, all of the precursor particulate materials are milled simultaneously.

The milling is preferably performed in a liquid. The liquid may be any having a low viscosity (e.g., less than about 100 centipoise) and may be easily removed by a technique such as spray drying. The liquid may be an organic liquid such as a ketone, alkane, ether, alcohol, ester, and the like. Preferably, the liquid is a polar solvent such as an alcohol (e.g., ethanol, butanol, propanol and methanol) or water. Preferably, the liquid is water.

When milling in a liquid, the particulate precursors are at most partially soluble in the liquid. Preferably, the amount of solubility is at most about 5%, more preferably at most about 2% and most preferably at most about 1% by weight soluble in the liquid. It is also desirable for the solubility to be the same for any other precursor material when milling in a liquid.

The milling is preferably performed in water with each particulate precursor being present. In this particular embodiment when all of the particulate precursors are milled simultaneously in water, it has been found to be advantageous to use an organic molecule having multiple acidic groups. The use of these surprisingly allows the milling of slurries having up to 50% solids loading by weight, for example, in water. The organic molecule or dispersant may be, for example, a polyacid. Exemplary polyacids include polyacrylic acid (typical molecular weights of 2000 to 100,000), polymethacrylic acid, polystyrene sulfonic acid and the like.

The amount of dispersant typically is any amount that is useful to allow the milling to small particle size at high solids loading (e.g., greater than about 40% or 45% solids loading by weight) while still having a low viscosity and does not gel (i.e., less than about 10,000 centipoise, but preferably less than about 5000 or even 2000 centipoise). Generally, the amount of dispersant is as little as possible and generally is at most about 5%, 3%, 2% or 1% to at least about 0.01% by the total weight of the slurry.

The particular mills, media time and particular parameters when employing milling may be any suitable such as those readily known in the ceramic arts. Generally, the media may be any of those commercially available, including for example, carbide media (SiC, WC with or without Co, mixed metal carbides with or without Co), ZrO₂, Al₂O₃ and combination thereof. A preferred media is yttria stabilized zirconia.

Once the precursor mixture is provided, the particulates are agglomerated to form secondary particles. The precursor mixture may be blended to form the mixture or milled dry or in a liquid separately and then combined or simultaneously. If the precursor mixture is provided dry, the agglomerating into secondary particles, for example, may be performed dry by a method such as mechanofusion in commercially available equipment from Hosokawa Micron Ltd. Preferably, each of the particulate precursors are dispersed into a liquid to form a slurry and then dried by a technique such as spray drying, freeze drying, super critical drying or the like. Preferably, the agglomerating is performed by spray drying of an aqueous slurry of the precursor mixture.

When spray drying from a liquid, it is preferred that the solids loading is at least 10%, more preferably at least 20%, even more preferably at least 30%, and most preferably at least 40% solids loading by weight to any achievable amount without gelling or where the liquid is too viscous to easily pump to the spray dryer (e.g., greater than 500,000 centipoise).

When forming the secondary particles, particularly by spray drying, it has been discovered that when the precursor particles have the aforementioned size, one can realize secondary particles that when formed into the LMO upon heating have essentially no free primary particles. In other words, it has been discovered that the secondary particles when heated fail to fracture, thus allowing for formation of an LMO that has a low surface area, broad size distribution, while still retaining good charge and discharge rate capability, but may be deagglomerated at pressure used to form cathodes.

After the secondary particles are formed, they are heated to a temperature in an oxygen containing atmosphere. The particular final or maximum temperature may vary depending on the chemical composition that is desired (i.e., amounts of Ni, Mn and Co). Typically, the maximum temperature is from about 800°C to about 930°C.

The time the particles are held at the maximum temperature are typically at least about 5 minutes to about 10 hours, but it is preferred that the time is 15 minutes or 30 minutes to 7.5 hours or 5 hours. It has been discovered that much greater times tend to cause larger primary grains and at times exaggerated grain growth, whereas lower temperatures fail to form the desired phase crystallinity (i.e., tends to fail to form a phase pure material with the desired electrochemical performance).

The heating may have a lower temperature hold during the heating (i.e., lower interim temperature holds). These may be performed, for example, to ensure uniformity of the temperature throughout the mixture, removal of undesired components (e.g., organic material or decomposition of the precursors to oxides) or formation of desirable interim phases useful to make the final lithium metal oxide. Typically, such interim temperatures occur from about 250°C to 800°C. At least one of the interim temperatures is desirably at least 400°C, 500°C or 600°C to at most about 800°C, 750°C or 700°C. The time at these temperatures is akin to those described for the maximum or final temperature above.

The heating may have any heating or cooling rate that is practical while achieving the desired lithium metal oxide. Typically, the heating rates are at least 0.1°C/min to 250/min. More typical rates are on the order of 1°C/min or 5°C/ min to 50°C/min or 20°C/min.

The heating occurs in an oxygen containing atmosphere, but it has been surprisingly discovered that atmospheres comprised primarily of oxygen or pure oxygen are not desirable and tend to form less than desired lithium metal oxide powders failing to exhibit good electrochemical performance or friability. The oxygen containing atmosphere preferably has a partial pressure of oxygen of at least about 0.1 to 0.3 or 0.25. Even though the atmosphere may be dynamic (e.g, flowing), the atmosphere is desirably static. In a preferred embodiment, the atmosphere may be flowing up to a lower interim temperature and then static up to the maximum temperature. Likewise, the oxygen partial pressure may be decreased during the heating.

It has been surprisingly discovered that a method to make a cathode using the LMO powder may employ lower amounts of organic binders compared to cathodes employing LMO powders starting with primary particles. In addition, because the LMO powders deagglomerate generally without fracturing the primary particles, it is believed other desirable properties such as cyclability and safety is not further comprised. The method of the invention comprises mixing the LMO powder of the first aspect with a solvent and a binder.

The LMO powder is mixed in a solvent so as to allow for a uniform mixture to be formed. The solvent may be any suitable solvent such as those known in the art and typically are polar and apolar organic solvents with low water contents (e.g., 500 ppm or less and preferably less than 100, 50, 10 or even 1 ppm). Examples of useful solvents include organic solvents such as n-methyl pyrrolidone (NMP) and acetone and polar solvents such as water and those described by Jin Chong, et al., Journal of Power Sources 196 (2011) pp. 7707 - 7714.

The LMO powder is also mixed with an organic binder to aid in the cohesiveness of the coating formed on a metal foil of the cathode and to adhere the coating to the foil. The binder may be any useful binder in making cathodes such as those known in the art. Examples include latexes and polyvinylidene fluoride (PVdF) such as those available from (Arkema Inc., King of Prussia, PA). Preferably, at least a portion or all of the binder dissolves in the organic binder. Generally, the amount of binder is from about 0.5% to 10% by weight of the total weight of the materials that remain in the coating after removal of the solvent. Preferably, the amount of binder is at most 7.5% or 5%.

The amount of solids (e.g., lithium metal oxide) may be any useful amount. Typically, the amount is from 10% to 90% by volume of the solvent and may be at least 20% or 30% to at most 80% or 70%.

Typically, the mixing is under any shear such as simple paddle mixers with or without baffles or a high shear mixer (e.g. colloid mill) may be used. Generally, the shear rate is at most about 5000 sec⁻¹ and generally is about 1 sec⁻¹ to about 1000 sec⁻¹. Other known additives useful for casting slurries on to foils may be utilized, such as suitable dispersants, lubricants and water scavengers.

The mixing is performed for a time to disperse the lithium metal oxide powder sufficiently so that the desired results are achieved. Typically, the time may be from several minutes to any time that is practicable such as days or hours.

The mixture is then coated on to a metal foil that is useful for making electrodes in batteries such as aluminum, carbon coated aluminum, etched aluminum, nickel, copper, gold, silver, platinum, and alloys of the aforementioned or combinations thereof and include those described in Hsien-Chang Wu et. al., Journal of Power Sources 197 (2012) pp. 301 - 304.

The coating of the slurry may be done by any useful technique such as those known in the art. Typically, the method employed is doctor blade casting at a desired gap. The gap generally is from about 5 to 100 micrometers.

After coating, the solvent is removed from the coating by any suitable method. Exemplary methods include removal by the application of heat, vacuum, radiative energy, sublimation after freezing, super critical drying or combination thereof.

After the solvent has been removed, the coating on the foil is subjected to pressing. This pressing in many instances is referred to a calendaring in the art to further increase the density of the coating on the metal foil. Typically, calendaring is performed by passing the cathode through a roll press with a set gap to realize a cathode with uniform thickness. The cathode may be passed through the roll press multiple times with changing gaps or the same gap depending on the behavior of the coating. When using a roll press, the gap is usually set to a gap that reduces the coating thickness by about 20 percent to 75 percent. Desirably, the gap is set to decrease the coating thickness by at least 30%, 40% or 60% to 70%. Generally, this amount of strain correlates to a pressing pressure of at most about 400 MPa and is typically at most about 300, 200 or 180 MPa to some low pressure which may be at least about 10 MPa.

In the preferred embodiment, employing the lithium metal oxide of this invention (the coating on the metal foil has a density of about 3 or 3.5 g/cc to about 4 g/cc.

Upon compacting the coating, it has been surprisingly discovered that the LMO powder of this invention may deagglomerate. "Deagglomerate or deagglomeration" herein means that at least about 50% by number of the primary particles making up the secondary particles of the LMO powder separate and are distinct primary particles after compacting the coating as described herein. Preferably, at least 60%, 70%, 80%, 90% or essentially all of the primary particles by number become separate. The amount of deagglomeration may be determined by microscopy prior to and after compaction.

In an embodiment, the lithium metal oxide powder of this invention may be used alone or with another battery cathode material such as those known in the art (e.g., lithium metal phosphates, nickel cobalt aluminum oxides or other LMOs). In a particular embodiment, the LMO powder lithium metal oxide comprised of secondary particles that do not deagglomerate upon pressing such as those known in the art made for example by precipitation techniques. In a preferred embodiment, the primary particle size and size distribution of the other cathode powder (e.g., second lithium metal oxide powder) is essentially the same (i.e., within about 20%) as described for the LMO powder of this invention, but the porosity of the secondary particles of the second LMO powder is less than 10% and is primarily (greater than about 50% by volume) or essentially (greater than about 95% by volume) made up of closed porosity.

LIBs comprised of a cathode of the invention's LMO powder may have any suitable design. Such a battery typically comprises, in addition to the cathode, an anode, a porous separator disposed between the anode and cathode, and an electrolyte solution in contact with the anode and cathode. The electrolyte solution comprises a solvent and a lithium salt.

Suitable anode materials include, for example, carbonaceous materials such as natural or artificial graphite, carbonized pitch, carbon fibers, graphitized mesophase microspheres, furnace black, acetylene black, and various other graphitized materials. Suitable carbonaceous anodes and methods for making them are described, for example, in U.S. Patent No. 7,169,511. Other suitable anode materials include lithium metal, lithium alloys, other lithium compounds such as lithium titanate and metal oxides such as TiO₂, SnO₂ and SiO₂, as well as materials such as Si, Sn, or Sb. The anode may be made using one or more suitable anode materials.

The separator is generally a non-conductive material. It should not be reactive with or soluble in the electrolyte solution or any of the components of the electrolyte solution under operating conditions but must allow lithium ionic transport between the anode and cathode. Polymeric separators are generally suitable. Examples of suitable polymers for forming the separator include polyethylene, polypropylene, polybutene-1, poly-3-methylpentene, ethylene-propylene copolymers, polytetrafluoroethylene, polystyrene, polymethylmethacrylate, polydimethylsiloxane, polyethersulfones and the like.

The battery electrolyte solution has a lithium salt concentration of at least 0.1 moles/liter (0.1 M), preferably at least 0.5 moles/liter (0.5 M), more preferably at least 0.75 moles/liter (0.75 M), preferably up to 3 moles/liter (3.0 M), and more preferably up to 1.5 moles/liter (1.5 M). The lithium salt may be any that is suitable for battery use, including lithium salts such as LiAsF₆, LiPF₆, LiPF₄(C₂O₄), LiPF₂(C₂O₄)₂, LiBF₄, LiB(C₂O₄)₂, LiBF₂(C₂O₄), LiClO₄, LiBrO₄, LiIO₄, LiB(C₆H₅)₄, LiCH₃SO₃, LiN(SO₂C₂F₅)₂, and LiCF₃SO₃. The solvent in the battery electrolyte solution may be or include, for example, a cyclic alkylene carbonate like ethylene carbonate; a dialkyl carbonate such as diethyl carbonate, dimethyl carbonate or methylethyl carbonate, various alkyl ethers; various cyclic esters; various mononitriles; dinitriles such as glutaronitrile; symmetric or asymmetric sulfones, as well as derivatives thereof; various sulfolanes, various organic esters and ether esters having up to 12 carbon atoms, and the like.

### ANALYTICAL TECHNIQUES

The particle size and size distribution (equivalent spherical diameter by volume) was measured using a Coulter particle size analyzer (Coulter LS230, Bechman Coulter Inc., Brea, CA) of the primary particles were determined. To perform the test, 2 drops of an aqueous slurry of particulate precursor after being milled is added to 10 ml deionized water and sonicated for 30 seconds. The slurry is inserted and measured by the Coulter particle size analyzer using the instruments standard procedures.

The pressed density of the LMO was determined by pressing about 1 gram of the LMO in a cylindrical die having diameter 12.9 mm at a pressure of 1.72 metric tons/cm², the results being reported in Table 2.

The bulk chemistry of the LMO was determined by inductive coupled plasma atomic emission spectroscopy (ICP-AES). The LMO was first dissolved by weighing 0.10 g portions in 50 mL polypropylene test tubes. Four mL of 50% (v/v) hydrochloric acid and 100 µL of concentrated hydrofluoric acid were added and heated on a heating block at approximately 85°C for 30 minutes. Then 2.0 mL of concentrated nitric acid was added and heated for an additional 5 minutes. The tubes were then removed from the heating block and diluted with deionized water. The prepared solutions were analyzed using ICP-AES on a Perkin Elmer 7300 DV inductively coupled plasma optical emission spectrometer using a 5 ug/mL Eu internal standard.

Specific surface area was determined by nitrogen absorption as per the Brunauer-Emmett-Teller theory.

The porosity of the secondary particles were determined by gallium ion cross-sectioning the secondary particles and imaging the cross-section in a scanning electron microscope. The area of the pores and area of the LMO were determined using image analysis software (ImageJ) to determine the porosity.

The electrical chemical performance was determined on coin cells. If another lithium metal cathode material was also used to make a cathode whether mixed with LMO or not, it also was made into a cell to determine electrical chemical performance in the same manner as described below.

The LMO or lithium metal cathode material of each Example and Comparative Example was mixed with SUPER P^{™} carbon black (Timcal Americas Inc., Westlake, OH), and polyvinylidene fluoride (PVdF) (Arkema Inc., King of Prussia, PA) binder in a weight ratio of LMO:SuperP:PVdF of 94:2.5::3.5. A slurry was prepared by suspending the cathode material, conducting material, and binder in solvent N-Methyl-2-pyrrolidone (NMP) followed by homogenization in a vacuum speed mixer (Thinky USA, Laguna Hills, CA). The NMP to solids ratio was approximately 1.6:1 before defoaming under mild vacuum. The slurry was coated on to battery grade aluminum foil using a doctor blade to an approximate thickness of 50 micrometers and dried for thirty minutes at 130°C in a dry convection oven. The aluminum foil was 15 micrometers thick.

The electrodes containing the LMO powder doctor bladed on to the aluminum foil were pressed on a roller press to form the final cathode. The roller press had a gap of about 0.03mm (30 micrometers). The density of the active materials (i.e., materials doctor bladed on the aluminum foil) was about 2.9g/cc to 3.1g/cc. The cathodes had an active material loading of about 10 mg/cm².

The cells were made in a dry environment (dew point less than or equal to -40°C). The electrolyte was ethylene carbonate/diethyl carbonate (EC:EMC, 1:3 by volume) with 1.0 M LiPF₆. The anode for the coin cells was 200 micrometers thick high purity lithium foil available from Chemetall Foote Corporation, New Providence, NJ. The separator was a commercially available coated separator.

The cells were cycled on a MACCOR Series 4000 battery testing station (MACCOR, Tulsa, OK). Cells were activated by charging at C/10 to 4.3V followed by a constant voltage hold until the current drops to C/20. The initial capacity of the battery was determined at a C rate of 0.1 and then the rate capability was also determined, in order thereafter at C rates of 0.1, 0.5, 1, 2, 5, 10.

Hybrid Pulse Power Characterization test (HPPC) is a standard method to test battery resistance at different state of charge (SOC) or depth of discharge(DoD) and is available under U.S. Department of Energy Vehicle Program, Battery Test Manual For Plug-In Hybrid Electric Vehicles Revision 2, December 2010, Chapter 3.4, (see, http://www.uscar.org/guest/article_view.php?articles_id =86). In the HPPC tests, the cells were preconditioned by being completed a full charge-discharge cycle and then charged in CC-CV mode to 4.3V at 0.5C rate and held at 4.3V until current dropped down to 0.01C. After resting for 1 hr, cells were discharged at 5C rate for 10 seconds. The voltages of the cells were monitored during the 10 second high rate discharge step and used to calculate electronic and ionic conductivities at that specific state of charge. Then cells were further discharged to different Depth of Discharge (DoD) or state of charge (SOC) at 0.1C rate followed by the high rate discharge step which determined the conductivities at that SOC. The test was repeated until the cell voltage dropped to 2.5V.

### EXAMPLES

The raw materials used to make the LMOs are shown in Table 1. The water used was deionized water.

### Example 1:

The LMO powder of Example 1 in Table 2 was made to a bulk chemistry of LiNi_{0.5}Mn_{0.3}Co_{0.2}O₂. It used the same proportions or precursors necessary to make this NMC except that an excess of Li was used in an amount of 1.05. The particulate precursors used were Li₂CO₃, Ni(OH)₂, Mn₃O₄ and Co₃O₄ as shown in Table 1.

All of the particulate precursors were mixed simultaneously in water at a solids loading of about 50% by weight. In addition to the water, 2% by weight of polyacrylic acid was also used to mix all the precursors. The mixture was milled in a Micromedia Bead Mill (PML-2, Buhler Inc. Mahwah, NJ) loaded with 0.2 to 0.3 mm diameter yittrium stabilized zirconia media (Sigmund Lindner, Germany. SiLibeads^{®} Type ZY premium quality). The mill was run at a power of 1KW/hour and milled for a sufficient time to realize the primary particle size D50 of 0.25 micrometer. The slurry had a viscosity of about 1600-2000 centipoise measured using a Brookfield Viscometer (Model DV-II+) using a #3 RV Spindle at 22°C (Brookfield, MA, USA).

The slurry was agglomerated by spray drying in MOBILE MINOR^{™} 2000 Model H spray dryer (GEA Niro, Denmark) with the feed rate of about 3.4 to 3.8 Kg/hour with a nitrogen flow of 20% 2 SCFM and 4 bar pressure to the atomizer. The inlet temperature was about 140°C and outlet temperature was about 60 to 65°C. The spray dried agglomerated precursors had a D50 secondary particle size of 8 micrometers.

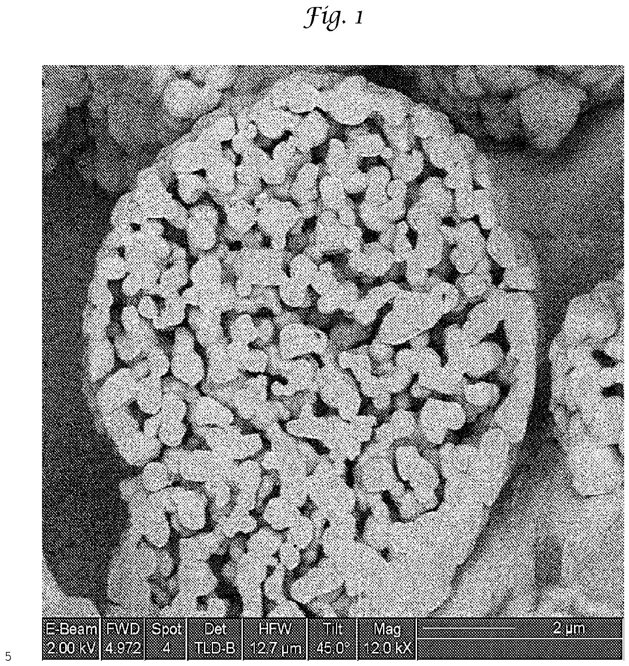

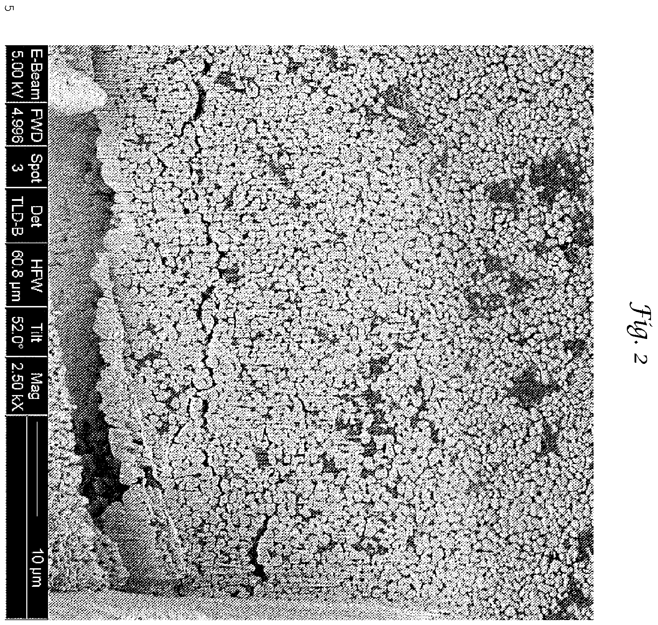

The spray dried agglomerated precursors (1kg) were heated in Unitherm^{®} U2 furnace with the protocol of soaking at interim temperature of 600°C for 2 hours and 2 hour ramp to a temperature of 930_{°}C and held there for 5 hours. After the final temperature hold, the LMO formed was cooled to room temperature in about 10 hours. Figure 1 shows a cross-section of the LMO formed. The LMO powder of Example 1, without further treatment, was made into a coin cell as described above and the cell's performance is shown in Example 1 of Table 2. Figure 2 shows a cross-section of the cathode of the coin cell after the cathode had been pressed. From Figure 2, it is readily evident that the LMO powder deagglomerated under the pressure used to make the cathode of the coin cell. The porosity of the LMO secondary particulate was about 21%.

### Example 2:

The LMO powder of Example 1 was broken (deagglomerated) prior to being formed into a coin cell. The LMO powder was deagglomerated by milling. The milling was performed by milling at a solids concentration of 50wt% in deionized water using zirconia media. The milling power was about 0.7kW/hour for 20 minutes. The deagglomerated power was separated by centrifugation at 3000rpm for 20 mins. The wet cake was then dried in vacuum atmosphere for 24 hours. It is evident the particles were deagglomerated by the measured particle size shown in Table 2 compared to Example 1.

### Example 3

In this Example, 90% by weight of the LMO of Comparative Example 1 was mixed with 10% by weight of the LMO of Example 1. The mixture was then made into a coin cell and the performance of the cell is shown in Table 2.

### Example 4

In this Example, 90% by weight of the LMO of Comparative Example 1 was mixed with 10% by weight of the LMO of Example 2. The mixture was then made into a coin cell and the performance of the cell is shown in Table 2.

### Comparative Example 1

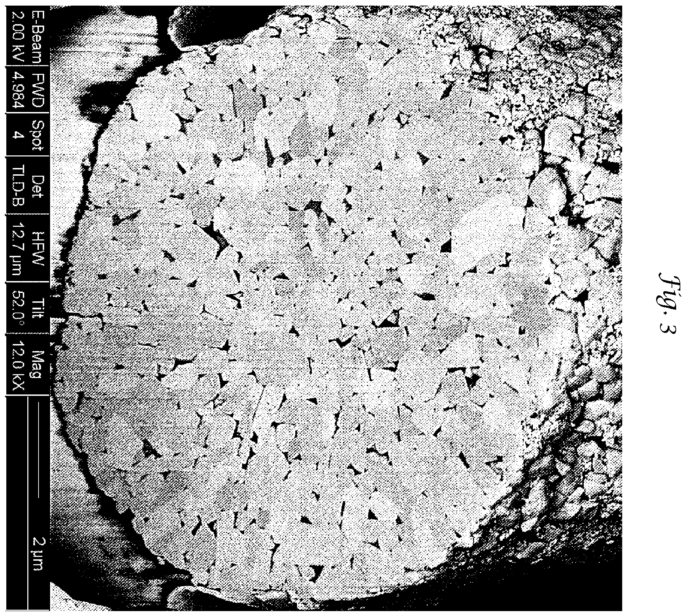

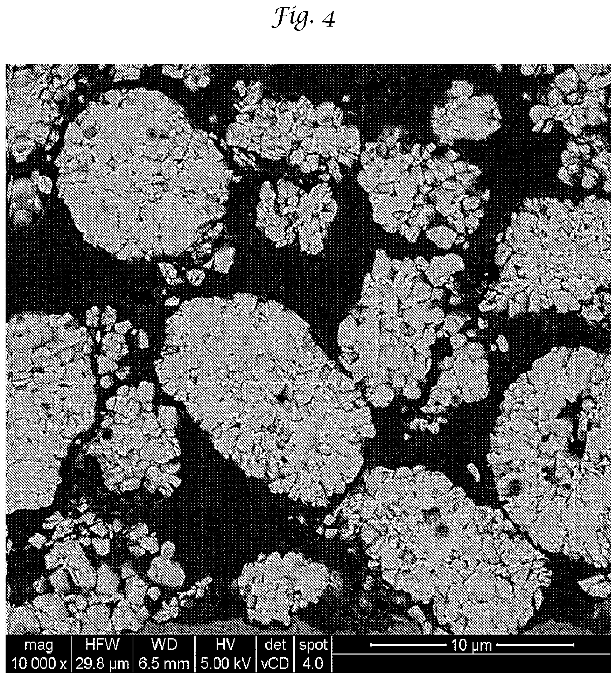

Comparative Example 1 is a coin cell made from a commercially available LMO with Ni:Mn:Co composition of 5:3:2 determined by ICP-AES available from Daejung Energy Material Co., LTD. Jeonbuk, Korea under TRADENAME L4L-6D12S2 This LMO is made by a coprecipitation process. The LMO has a d50 of 15 micrometers. The LMO is shown in Figure 3. The porosity of the LMO secondary particulate was about 6.9%. The pressed LMO in the electrode is shown in Figure 4. It is quite evident that the LMO powder did not deagglomerate during pressing to form the electrode.

### Comparative Example 2

Comparative Example 2 is a coin cell made from the commercially available LMO powder of Comparative Example 1 after it had been milled in the same manner as the LMO powder of Example 2. From the D50 it is apparent that the powder was milled to smaller particulates. It was also noticed, however, that the morphology of these particulates was different than the LMO powder of Example 2 that had been milled. This may be due to some of the primary particles themselves being fractured during the milling.

### Comparative Example 3

Comparative Example 3 is a coin cell made from a mixture of 90% by weight of commercially available LMO powder of Comparative Example 1 and 10% by weight of the same LMO powder after it was milled as in Comparative Example 2.

From Table 2, it is evident that the LMO powder of this invention when pressed to form the coin cell displays substantially higher rate capability. The results in Table 2 also show that there is substantial improvement to a coin cell when mixing the LMO of this invention with an LMO not of this invention. For example, Examples 3 and 4 show higher powder densities and significant improvement in electronic and ionic conduction in the Hybrid Pulse Power Characterization test (HPPC) compared to any of the Comparative Examples. In addition, when Examples 1-4 are compared, it is apparent that the performance of the cells are further improved (lower resistivity) when the LMO of this invention are deagglomerated during the formation of the cathode and not milled prior to making the coin cell.

**Table 1**

| Raw materials | Formula | MW (g/mol) | Supplier | Purity (%) | Particle size | Density (g/cc) | other characteristics |
|---|---|---|---|---|---|---|---|
| Lithium carbonate | Li₂CO₃ | 73.9 | SQM | 99.4% | d50:5.7µm | | Tap density = 0.78g/cc |
| | | | | | d90:11.4pm | | |
| | | | | | d100:26.3µm | | |
| Nickel (II) Hydroxide* | Ni(OH)₂ | 92.7 | Palm | Ni=62.8% | -325mesh | 4.1 | Green powder |
| Cobalt (II, III) oxide* | Co₃O₄ | 240.8 | Freeport | Co = 72.5% | d100<20 µm | | |
| | | | Cobalt | | d95<10 µm | | |
| Polyacrylic acid | (C₃H₄O₂)ₙ | -1800 | sigma-Aldrich | 99% | | | White powder |
| Manganese (II, III) Oxide | Mn₃O₄ | 228.82 | Erachem | Mn = 71.2%; | | | Fine brownish powder |
| | | | | H₂O <0.6% | | | |
| | | | | S = 0.04%; | | | |
| | | | | <100 ppm other metals | | | |

**Table 2**

| Example | LMO Powder description | d50 (um) | 0.1C capacity @4.3V | Rate capability, 5C/0.1C (%) | Powder press density (g/cc. @1.72ton/ cm²) | Ionic conductivity* ( Ω.cm²) | | Electronic conductivity* ( Ω.cm²) | | Total specific resistance* (Ω.cm²) | |
|---|---|---|---|---|---|---|---|---|---|---|---|
| | | | | | | 22% DoD | 77% DoD | 22% DoD | 77% DoD | 22% DoD | 77% DoD |
| 1 | 100% Ex. 1 as is | 8 | 173 | 85 | 2.76 | 9.8 | 10.5 | 16.4 | 20.7 | 26.2 | 31.2 |
| 2 | Milled Ex.1 | -1 | 171 | 75 | 2.92 | 10.9 | 14.0 | 20.9 | 24.6 | 31.8 | 38.6 |
| 3 | Comp. Ex1/Ex1(90% 110%) | NA | 162 | 73.5 | 3.48 | 8.9 | 10.5 | 20.3 | 24.4 | 29.2 | 34.9 |
| 4 | Comp. Ex1/Ex2(90% /10%) | NA | 165 | 74.3 | 3.5 | 9.7 | 12.1 | 17.7 | 22.9 | 27.4 | 35.0 |
| Comp. Ex. 1 | Comp. Ex 1 as is | 15 | 168 | 73.8 | 3.33 | 10.0 | 12.5 | 22.8 | 26.5 | 32.8 | 39 |
| Comp. Ex. 2 | Milled Comp. Ex. 1 | ~1 | 174 | 73 | 2.95 | 11.2 | 14.3 | 30.9 | 35.8 | 42.1 | 50.1 |
| Comp. Ex. 3 | Comp. Ex 1/Comp. Ex 2(90%/10%) | NA | 163 | 72.9 | 3.37 | 11.1 | 13.7 | 20.7 | 26.8 | 31.8 | 40.5 |

Data shown are the averages of three cells with standard deviation of +1.0 Ω.cm² maximum.

## Claims

1. A lithium metal oxide powder useful to make a lithium ion battery cathode, the lithium metal oxide powder comprising secondary particles comprised of agglomerated primary lithium metal oxide particles bonded together, the primary lithium metal oxide particles being comprised of Li, Ni, Mn, Co and oxygen and having a median primary particle size of 0.1 micrometer to 3 micrometers, wherein the secondary particles have a porosity that is from 15% to 35% and, by volume, the porosity is greater than 50% open porosity;
wherein said lithium metal oxide powder is represented by: LiₓM_{y}O₂
where 0.8<x<1.15, y is 1 and M being comprised of Ni, Co and Mn and being present in an amount as represented by: Ni_{1-a-b}MnₐCo_{b} where 0.1≤a≤0.9 and 0.05≤b≤0.8 and (1-a-b)/(a+b) is 0.25 to 1.5; and
wherein the secondary particles have a surface area of 0.1 m²/g to 0.75 m²/g.

2. The lithium metal oxide powder of Claim 1, wherein the porosity of the secondary particles is from 15% to 25%.

3. The lithium metal oxide powder of Claim 1, wherein the lithium metal oxide powder deagglomerates at a pressure sufficient to form a cathode comprised of the lithium metal oxide powder adhered to a metal foil, wherein the pressure is from 10MPa to 300MPa;
wherein at least 50% by number of the primary particles making up the secondary particles of the lithium metal oxide powder separate and are distinct primary particles after compacting.

4. The lithium metal oxide of Claim 1, wherein the secondary particles have a median size (D50) of 5 micrometers to 25 micrometers.

5. A method of forming a cathode comprising:
(a) mixing the lithium metal oxide powder of Claim 1, a binder and a solvent to form a coating mixture;
(b) contacting the coating mixture to a surface of a metal foil;
(c) removing the solvent to form metal foil having a coating thereon, the coating comprised of the lithium metal oxide and binder; and
(d) pressing the metal foil having the coating thereon to form the cathode, wherein said coating, after pressing, is comprised of deagglomerated lithium metal oxide secondary particles.

6. The method of Claim 5, wherein the solvent is an organic solvent.

7. The method of Claim 6, wherein the binder is an organic binder that dissolves in the solvent.

8. The method of Claim 7, wherein the amount of binder is at most 10% by weight of the coating.

9. The method of Claim 8, wherein the coating is further comprised of a second cathode powder that is comprised of secondary particles that do not deagglomerate during the pressing.

10. The method of Claim 9, wherein the lithium metal oxide powder is present in an amount of 10% to 40% by weight of the coating and essentially all of the secondary particles deagglomerate.

11. The method of Claim 9, wherein the second cathode powder is a lithium metal oxide, lithium metal phosphate or mixture thereof.

12. The lithium metal oxide powder of Claim 1, wherein the porosity is essentially all open porosity.

## Patentansprüche

1. Lithiummetalloxidpulver, nützlich zur Herstellung einer Lithium-Ionen-Batteriekathode, worin das Lithiummetalloxidpulver Sekundärteilchen umfasst, die aus agglomerierten primären Lithiummetalloxidteilchen bestehen, die aneinander gebunden sind, worin die primären Lithiummetalloxidteilchen Li, Ni, Mn, Co und Sauerstoff umfassen und eine mittlere primäre Teilchengröße von 0,1 Mikrometer bis 3 Mikrometer aufweisen, worin die Sekundärteilchen eine Porosität von 15% bis 35% bezogen auf das Volumen aufweisen und die Porosität größer als 50% offene Porosität ist;
worin das Lithiummetalloxidpulver dargestellt wird durch:
LiₓM_{y}O₂
worin 0,8<x<1,15, y 1 ist und M aus Ni, Co und Mn besteht und in einer Menge vorhanden ist, die dargestellt wird durch: Ni_{1-a-b}MnₐCo_{b} worin 0,1≤a≤0,9 und 0,05≤b≤0,8 und (1-a-b)/(a+b) 0,25 bis 1,5 ist; und
worin die Sekundärteilchen eine Oberfläche von 0,1 m²/g bis 0,75 m²/g aufweisen.

2. Lithiummetalloxidpulver nach Anspruch 1, worin die Porosität der Sekundärteilchen 15% bis 25% beträgt.

3. Lithiummetalloxidpulver nach Anspruch 1, wobei das Lithiummetalloxidpulver bei einem Druck deagglomeriert, der ausreicht, um eine Kathode auszubilden, die aus dem Lithiummetalloxidpulver besteht, das an einer Metallfolie haftet, wobei der Druck von 10 MPa bis 300 MPa beträgt;
wobei mindestens 50% der Anzahl der Primärteilchen, die die Sekundärteilchen des Lithiummetalloxidpulvers bilden, sich abtrennen und nach dem Verdichten unterschiedliche Primärteilchen sind.

4. Lithiummetalloxid nach Anspruch 1, wobei die Sekundärteilchen eine mittlere Größe (D50) von 5 Mikrometern bis 25 Mikrometern aufweisen.

5. Verfahren zur Herstellung einer Kathode, welches umfasst:
(a) Mischen des Lithiummetalloxidpulvers nach Anspruch 1, eines Bindemittels und eines Lösungsmittels zur Bildung einer Beschichtungsmischung;
(b) Inkontaktbringen der Beschichtungsmischung mit einer Oberfläche einer Metallfolie;
(c) Entfernen des Lösungsmittels zur Bildung einer Metallfolie mit einer Beschichtung darauf, worin die Beschichtung aus dem Lithiummetalloxid und dem Bindemittel besteht; und
(d) Pressen der Metallfolie mit der darauf befindlichen Beschichtung zur Bildung der Kathode, worin die Beschichtung nach dem Pressen aus deagglomerierten sekundären Lithiummetalloxidteilchen besteht.

6. Verfahren nach Anspruch 5, worin das Lösungsmittel ein organisches Lösungsmittel ist.

7. Verfahren nach Anspruch 6, worin das Bindemittel ein organisches Bindemittel ist, das sich in dem Lösungsmittel auflöst.

8. Verfahren nach Anspruch 7, worin die Menge des Bindemittels höchstens 10 Gew.-% der Beschichtung beträgt.

9. Verfahren nach Anspruch 8, worin die Beschichtung ferner ein zweites Kathodenpulver umfasst, das aus Sekundärteilchen besteht, die während des Pressens nicht deagglomerieren.

10. Verfahren nach Anspruch 9, worin das Lithiummetalloxidpulver in einer Menge von 10 bis 40 Gew.-% der Beschichtung vorhanden ist und wobei im Wesentlichen alle Sekundärteilchen deagglomerieren.

11. Verfahren nach Anspruch 9, worin das zweite Kathodenpulver ein Lithiummetalloxid, Lithiummetallphosphat oder eine Mischung davon ist.

12. Lithiummetalloxidpulver nach Anspruch 1, wobei die Porosität im Wesentlichen vollständig offen ist.

## Revendications

1. Poudre d'oxyde de métal et de lithium utile pour fabriquer une cathode de batterie au lithium-ion, la poudre d'oxyde de métal et de lithium comprenant des particules secondaires constituées de particules d'oxyde de métal et de lithium primaires agglomérées liées ensemble, les particules d'oxyde de métal et de lithium primaires étant constituées de Li, Ni, Mn, Co et d'oxygène et ayant une taille de particule primaire médiane de 0,1 micromètre à 3 micromètres, dans laquelle les particules secondaires possèdent une porosité qui est de 15 % à 35 % et, en volume, la porosité est supérieure à 50% de porosité ouverte ;
dans laquelle ladite poudre d'oxyde de métal et de lithium est représentée par :
LiₓM_{y}O₂
où 0,8 < x < 1,15, y est égal à 1 et M étant constitué de Ni, Co et Mn et étant présent dans une quantité telle que représentée par : Ni_{1-a-b}MnₐCo_{b} où 0,1 ≤ a ≤ 0,9 et 0,05 ≤ b ≤ 0,8 et (1-a-b)/(a+b) est de 0,25 à 1,5 ; et
dans laquelle les particules secondaires possèdent une aire surfacique de 0,1 m²/g à 0,75 m²/g.

2. Poudre d'oxyde de métal et de lithium selon la revendication 1, dans laquelle la porosité des particules secondaires est de 15 % à 25 %.

3. Poudre d'oxyde de métal et de lithium selon la revendication 1, dans laquelle la poudre d'oxyde de métal et de lithium se désagrège à une pression suffisante pour former une cathode constituée de la poudre d'oxyde de métal et de lithium adhérant à une feuille de métal et, dans laquelle la pression est de 10 MPa à 300 MPa ;
dans laquelle au moins 50 % en nombre des particules primaires qui composent les particules secondaires de la poudre d'oxyde de métal et de lithium se séparent et sont des particules primaires distinctes après compactage.

4. Oxyde de métal et de lithium selon la revendication 1, dans lequel les particules secondaires possèdent une taille médiane (D50) de 5 micromètres à 25 micromètres.

5. Procédé de formation d'une cathode comprenant les étapes consistant à :
(a) mélanger la poudre d'oxyde de métal et de lithium selon la revendication 1, un liant et un solvant pour former un mélange de revêtement ;
(b) mettre en contact le mélange de revêtement avec une surface d'une feuille de métal ;
(c) éliminer le solvant pour former une feuille de métal ayant un revêtement sur celle-ci, le revêtement étant constitué de l'oxyde de métal et de lithium et du liant ; et
(d) presser la feuille de métal ayant le revêtement sur celle-ci pour former la cathode, dans lequel ledit revêtement, après pressage, est constitué de particules secondaires d'oxyde de métal et de lithium désagrégées.

6. Procédé selon la revendication 5, dans lequel le solvant est un solvant organique.

7. Procédé selon la revendication 6, dans lequel le liant est un liant organique qui se dissout dans le solvant.

8. Procédé selon la revendication 7, dans lequel la quantité de liant est au plus de 10 % en poids du revêtement.

9. Procédé selon la revendication 8, dans lequel le revêtement est en outre constitué d'une seconde poudre de cathode qui est constituée de particules secondaires qui ne se désagrègent pas pendant le pressage.

10. Procédé selon la revendication 9, dans lequel la poudre d'oxyde de métal et de lithium est présente dans une quantité de 10 % à 40 % en poids du revêtement et sensiblement la totalité des particules secondaires se désagrègent.

11. Procédé selon la revendication 9, dans lequel la seconde poudre de cathode est un oxyde de métal et de lithium, un phosphate de métal et de lithium ou un mélange de ceux-ci.

12. Poudre d'oxyde de métal et de lithium selon la revendication 1, dans laquelle la porosité est sensiblement la totalité de la porosité ouverte.
